# DEMANDE DE BREVET EUROPEEN

(11) **EP 1 215 852 A1**
(43) Date de publication de la demande: **19.06.2002**
(21) Numéro de dépôt: 01402871.6
(22) Date de dépôt: 08.11.2001
(51) Int. Cl.: H04L 12/46, H04L 12/28

(54) **Procédé et interface radio pour permettre la mobilité d'un terminal sans fil dans un réseau conforme à la norme IEEE 802.1Q**

(30) Priorité: 12.12.2000 FR 0016187; 15.01.2001 FR 0100467
(71) Demandeur: ALCATEL, 75008 Paris (FR)
(72) Inventeur: Gouret, Vincent, 67000 Strasbourg (FR); Lauriol, Jean-Michel, 67640 Fegersheim (FR)
(74) Mandataire: Sciaux, Edmond

(57) **Abrégé**

Ce procédé consiste à :
- configurer selon la norme IEEE 802.1Q :
   -- tous les port (1-SW11, 2-SW13) de commutateur qui sont reliés à des points d'accès radio (AP1, AP2) ;
   -- chaque port (3-SW11, 3-SW12, 4-SW12, 5-SW12, 3-SW13) de commutateur qui est utilisé pour une liaison inter-commutateur ou une liaison commutateur-routeur ;
   -- l'interface du routeur (R) reliée au commutateur (SW12) ;
- configurer les commutateurs pour fonctionner en réseaux virtuels par adresse Internet ;
- établir une liaison entre le réseau local et un terminal mobile (WT1) via un port (2-SW13) de commutateur, et via un point d'accès radio (AP2) relié à ce port ;
- établir une liaison entre le réseau local et un terminal mobile (WT1) via un port (2-SW11) de commutateur, et via un point d'accès radio (AP2) relié à ce port ;
- et inscrire dans l'en-tête de chaque trame émise par ce terminal mobile (WT1), en direction du réseau local, un identificateur de réseau virtuel (ID1, ID2), conformément à la norme IEEE 802.1Q.

Application aux réseaux locaux comportant des terminaux sans fil.

## Description

L'invention concerne un procédé pour permettre la mobilité d'un terminal sans fil, dans un réseau local conforme à la norme IEEE 802.1Q, et un dispositif d'interface radio pour la mise en oeuvre de ce procédé.

Cette norme permet de définir, utiliser, et administrer un réseau local constitué de plusieurs sous-réseaux logiques appelés réseaux locaux virtuels (Virtual Local Area Network ou VLAN). Ces sous-réseaux logiques peuvent éventuellement utiliser des technologies différentes (Ethernet, Token Ring, etc) et ils sont reliés entre eux par des ponts. Des routeurs sont utilisés en outre pour établir des connexions entre des terminaux appartenant à des sous-réseaux physiques quelconques.

L'invention concerne plus particulièrement les réseaux locaux utilisant le protocole Internet pour le routage ; le protocole Ethernet, ou Token Ring, etc, étant utilisé pour les liaisons.

Un réseau local subdivisé en plusieurs réseaux virtuels permet de définir des groupes de terminaux pouvant échanger des données entre eux, quelle que soit l'architecture physique du réseau, et il permet éventuellement de restreindre ou d'interdire l'échange de données entre des terminaux appartenant à des groupes différents, pour des raisons de sécurité. Pour exploiter des réseaux virtuels, un pont doit pouvoir distinguer, chaque fois qu'il reçoit une trame, à quel réseau virtuel appartient cette trame.

La norme IEEE 802.3 définit un format qui ne permet pas de distinguer explicitement ces réseaux virtuels. La norme IEEE 802.1Q en est une extension qui définit une trame dite étiquetée, permettant de distinguer explicitement une pluralité de réseaux virtuels. Dans chaque trame, un champ « type de trame » (Plus précisément, un champ « longueur/type ») indique si cette trame est étiquetée ou non. Si elle est étiquetée, un champ « étiquette » contient un numéro de douze bits, qui identifie explicitement un réseau virtuel. La norme 802.1Q interdit qu'un routeur ou un commutateur envoie des trames des deux types sur un même segment de réseau, pour un même réseau virtuel. Selon cette norme, on peut configurer individuellement les ports d'un routeur ou d'un commutateur pour qu'ils étiquètent les trames appartenant à un réseau virtuel donné. Un routeur conforme à la norme IEEE 802.1Q peut émettre sur une même liaison des trames appartenant à différents réseaux virtuels.

On connaît trois procédés pour définir l'appartenance d'une trame à un réseau virtuel :
- d'après l'identité du port qui reçoit cette trame ;
- d'après l'adresse physique du terminal qui a émis cette trame (Medium Access Control Address du protocole Ethernet, ou Token Ring, etc) ;
- ou d'après l'adresse Internet d'origine, que contient chaque trame et qui constitue l'adresse logique du terminal qui a émis la trame (Tous les terminaux appartenant à un même sous-réseau logique ont des adresses Internet respectives qui comportent un certain nombre de bits identiques qui servent à identifier le sous-réseau, pour les opérations de routage).

Pour ces trois procédés, on peut déterminer l'appartenance d'une trame soit à partir de règles logiques, soit en lisant une étiquette insérée dans la trame et contenant explicitement un identificateur de réseau virtuel.

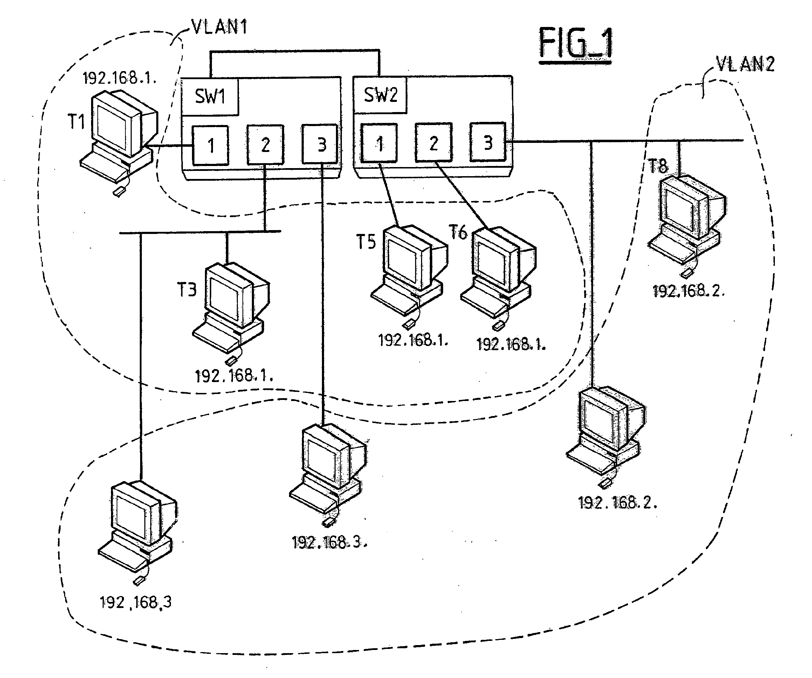

La **figure 1** représente schématiquement un exemple de réseau local de type connu, dans lequel deux réseaux locaux virtuels sont distingués grâce aux adresses Internet des terminaux. Il comporte :
- deux commutateurs Ethernet SW1 et SW2 reliés entre eux par une liaison IEEE 802.1Q pour que des terminaux situés de part et d'autre, mais appartenant à un même réseau virtuel, puissent communiquer ;
- un terminal filaire T1 relié à un port n°1 du commutateur SW1 ;
- deux terminaux filaires T2 et T3 reliés par un bus à un port n°2 du commutateur SW1 ;
- un terminal filaire T4 relié à un port n°3 du commutateur SW1 ;
- un terminal filaire T5 relié à un port n°1 du commutateur SW2 ;
- un terminal filaire T6 relié à un port n°2 du commutateur SW2 ;
- et deux terminaux filaires T7 et T8 reliés par un bus à un port n°3 du commutateur SW2.

Dans cet exemple, un réseau virtuel VLAN 1 est identifié par le mot binaire 192.168.1 qui constitue les trois premiers octets de l'adresse Internet de chacun des terminaux T1, T3, T5, T6. Un réseau virtuel VLAN 2 est identifié par le mot binaire 192.168.2 et par le mot binaire 192.168.3 qui constituent respectivement les trois premiers octets de l'adresse Internet de chacun des terminaux T2, T4, et T7, T8. Ces deux mots binaires différents correspondent à deux sous-réseaux logiques différents. Les adresses Internet de ces terminaux différent les unes des autres par le quatrième et dernier octet. Le port n°2 du commutateur SW1 doit être conforme à la norme IEEE 802.1Q pour pouvoir communiquer avec les terminaux T2 et T3 appartenant à deux réseaux virtuels différents.

Il peut être nécessaire de déplacer physiquement un terminal, tout en conservant son appartenance à un réseau virtuel. On déconnecte alors la liaison filaire de ce terminal, on le déplace, puis on le reconnecte. Le processus d'identification de réseau virtuel continue à fonctionner sans qu'il soit nécessaire de reconfigurer le terminal déplacé, ni les commutateurs, parce que dans ce réseau l'appartenance des trames à un réseau virtuel est déterminée d'après l'adresse Internet du terminal qui a émis cette trame.

Maintenant, on utilise de plus en plus des terminaux mobiles reliés par radio à des bornes émettrices-réceptrices fixes, appelées points d'accès, qui sont reliées à un réseau local. Il existe aussi des cartes d'interface réseau, sans fil, pour relier par radio des terminaux à un réseau local, ces terminaux étant par exemple des ordinateurs portables, qui étaient auparavant reliés à un réseau local par une liaison filaire. Il arrive donc plus fréquemment qu'un terminal soit déconnecté d'un segment du réseau local puis soit reconnecté à un autre segment du réseau local. Il est souhaitable de pouvoir encore décomposer un réseau local en plusieurs réseaux virtuels. Il se pose donc le problème de permettre à ces terminaux mobiles de changer de point d'accès radio tout en conservant leur appartenance à un réseau virtuel donné, et en conservant leurs adresses Internet d'origine.

Quand on utilise une liaison radio, il n'est pas possible d'appliquer directement les procédés connus permettant de distinguer le réseau virtuel auquel appartient chaque terminal. En effet, les points d'accès radio connus ne suivent que partiellement la norme IEEE 802.1Q. En particulier, ils transmettent les trames Ethernet sans modifier les champs des en-têtes, concernant cette norme, c'est à dire le champ type de trame (étiquetée ou non) et le champ étiquette. Un port de commutateur qui reçoit des trames via une telle liaison radio ne peut identifier l'appartenance de chaque trame que par l'application de règles prédéfinies. Si un point d'accès radio était en liaison radio simultanément avec deux terminaux mobiles appartenant à des réseaux virtuels différents, le port du commutateur auquel ce point d'accès serait rattaché, modifierait constamment l'appartenance de ce port à un réseau virtuel. Ce commutateur serait donc, à certains moments, incapable de transmettre des trames en direction d'un terminal mobile donné appartenant à un réseau virtuel autre que celui auquel le port est attribué à l'instant considéré.

La requête pour commentaire IETF RFC 2002 décrit un procédé appelé Internet mobile qui résout ce problème parce qu'il permet de joindre un terminal grâce à son adresse Internet d'origine. Ce procédé connu a pour inconvénient d'introduire un temps de latence, non négligeable pour certains services, lors de chaque changement de sous-réseau consécutif à un changement de point d'accès radio. En effet, chaque terminal doit s'enregistrer auprès du routeur du sous-réseau visité, et du routeur du sous-réseau d'origine. Ce procédé nécessite en outre d'utiliser des routeurs, et des terminaux sans fil, construits spécifiquement pour appliquer ce procédé.

Le but de l'invention est de remédier à ces inconvénients.

Un premier objet de l'invention est un procédé pour permettre la mobilité d'un terminal sans fil dans un réseau local conforme à la norme IEEE 802.1 Q, ce réseau comportant :
- des points d'accès radio transparents pour les trames conformes à la norme IEEE 802.1Q;
- des terminaux mobiles, ces terminaux appartenant à une pluralité de réseaux virtuels, et ces terminaux ayant chacun une adresse Internet ;
- au moins un commutateurs et au moins un routeur, tous les commutateurs étant configurés pour fonctionner en réseaux virtuels par adresses Internets ;
**caractérisé** en ce qu'il consiste à :
- configurer selon la norme IEEE 802.1Q :
   -- tous les port de commutateur qui sont reliés à des points d'accès radio ;
   -- chaque port de commutateur qui est utilisé pour une liaison inter-commutateur ou une liaison commutateur-routeur ;
   -- l'interface de chaque routeur reliée à un commutateur ;
- configurer tous les commutateurs pour fonctionner en réseaux virtuels par adresses Internets ;
- établir une liaison entre le réseau local et un terminal mobile via un port de commutateur, et via un point d'accès radio relié à ce port ;
- et inscrire dans l'en-tête de chaque trame émise par ce terminal, en direction du réseau local, un identificateur de réseau virtuel, conformément à la norme IEEE 802.1Q.

Ainsi, lorsqu'une trame émise par un terminal sans fil arrive sur le port d'un commutateur, elle est toujours étiquetée explicitement avec un identificateur de réseau virtuel. Le port ayant été configuré conformément à la norme IEEE 802.1Q, il lit cette étiquette et n'a donc aucun problème pour connaître de manière exacte à quel réseau virtuel appartient chaque trame, bien que les trames reçues proviennent de différents réseaux virtuels.

Lorsque ce port doit émettre une trame vers un terminal sans fil, il n'a pas de problème pour accepter cette trame, quel que soit le réseau virtuel auquel elle appartient, parce qu'il est configuré conformément à la norme IEEE 802.1Q.

Un second objet de l'invention est un dispositif d'interface radio pour terminal sans fil, pour utiliser ce terminal dans un réseau local conforme à la norme IEEE 802.1Q, ce réseau comportant une pluralité de terminaux appartenant respectivement à une pluralité de réseaux virtuels ; ces terminaux ayant chacun une adresse Internet ;
**caractérisée** en ce que cette interface comporte des moyens pour inscrire dans l'en-tête de chaque trame émise par ce terminal, en direction du réseau, un identificateur de réseau virtuel.

L'invention sera mieux comprise et d'autres caractéristiques apparaîtront à l'aide de la description ci-dessous et des figures l'accompagnant :
-- La **figure 1** (décrite ci-dessus) représente schématiquement un exemple de réseau local de type connu, dans lequel deux réseaux locaux virtuels sont distingués grâce aux adresse Internet des terminaux .
-- La **figure 2** représente schématiquement un exemple de réseau local mettant en oeuvre le procédé selon l'invention.
-- La **figure 3** représente schématiquement un exemple de terminal sans fil comportant un dispositif d'interface radio selon l'invention.

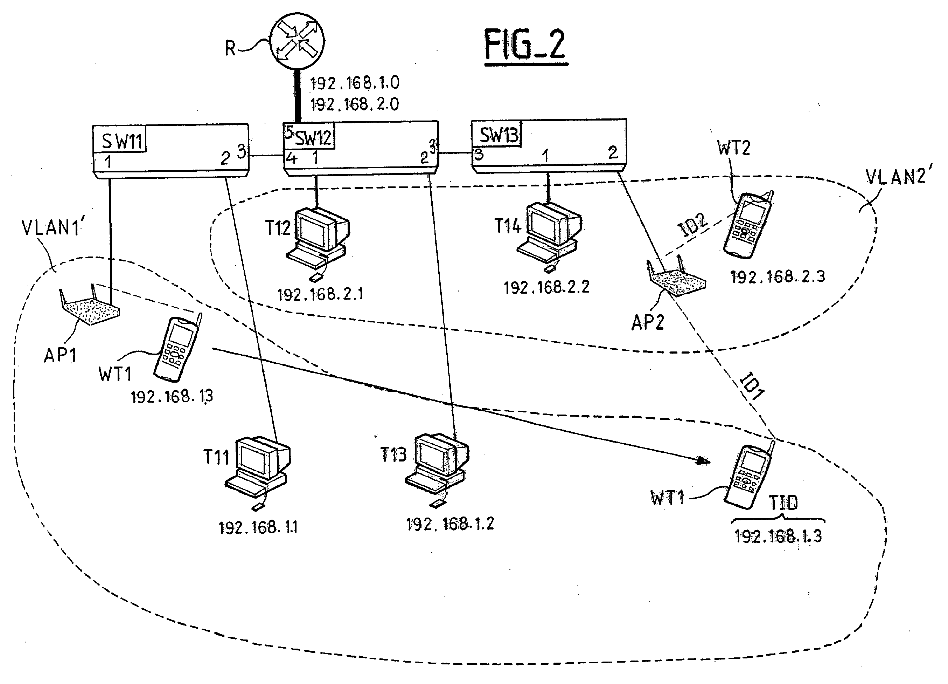

L' exemple de réseau représenté sur la **figure 2** comporte :
- un routeur R relié à un commutateur Ethernet SW12, qui est lui-même relié à deux commutateurs Ethernets SW11 et SW13 ; ce routeur permettant à des terminaux de communiquer en utilisant leurs adresses Internet ;
- un point d'accès radio AP1 relié au port 1 du commutateur SW11 ;
- un terminal filaire T11 relié au port 2 du commutateur SW11 ;
- un terminal filaire T12 relié au port 1 du commutateur SW12 ;
- un terminal filaire T13 relié au port 2 du commutateur SW12 ;
- un terminal filaire T14 relié au port 1 du commutateur SW13 ;
- un point d'accès radio AP2 relié au port 2 du commutateur SW13 ;
- deux terminaux sans fil WT1 et WT2, qui sont deux terminaux multifonctions (par exemple radiotéléphone et assistant personnel).

Les commutateurs SW11, SW12, SW13 sont configurés pour fonctionner en réseaux virtuels définis par adresses Internets.

Le port 1 du commutateur SW11, et le port 2 du commutateur SW13, qui sont reliés respectivement aux points d'accès radio AP1 et AP2, sont configurés conformément à la norme IEEE 802.1Q.

Un port 3 du commutateur SW11 est relié à un port 4 du commutateur SW12. Un port 3 du commutateur SW12 est relié à un port 3 du commutateur SW13. Un port 5 du commutateur SW 12 est relié à un port du routeur R. Tous les ports utilisés pour les liaisons inter-commutateur sont configurés selon la norme IEEE 802.1Q. Le port 5 du commutateur SW12 et l'interface du routeur R qui sont reliés sont configurés aussi selon la norme IEEE 802.1Q, c'est à dire que les trames sont étiquetées avec un identificateur de réseau virtuel.

Les points d'accès radio AP1 et AP2 sont classiques mais sont choisis parmi ceux qui sont transparents aux trames conformes à la norme IEEE 802.1Q.

Dans cet exemple, les règles d'appartenance à un réseau virtuel sont les suivantes. Un réseau virtuel VLAN l'est identifié par le mot binaire 192.168.1 contenu dans les trois premiers octets de l'adresse Internet de chacun des terminaux WT1, T11, T13. Un réseau virtuel VLAN 2' est identifié par le mot binaire 192.168.2 contenu dans les trois premiers octets de l'adresse Internet de chacun des terminaux T12, T14, WT2. Les adresses Internet de ces terminaux différent les unes des autres par le quatrième et dernier octet. Par exemple, le terminal WT1 a une adresse Internet, TID, égale à 192.168.1.3, dans laquelle le champ 192.168.1 permet de reconnaître l'appartenance d'une trame au réseau virtuel VLAN1', lorsque cette trame n'est pas étiquetée avec l'identificateur ID1 de ce réseau virtuel.

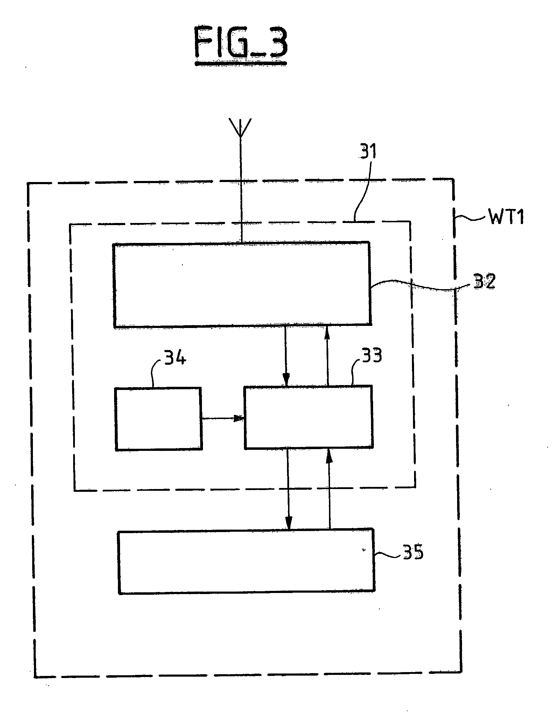

La **figure 3** représente schématiquement le schéma synoptique d'un terminal sans fil, WT1 par exemple, comportant un dispositif d'interface radio 31 selon l'invention, et un circuit 35 de traitement de données. Ce dispositif 31 comporte :
- un circuit 32 d'émission/réception de trames radio,
- un circuit 33 de formation/décomposition de trames Ethernet,
- et un circuit 34 de mémorisation d'un identificateur de réseau virtuel.

Le circuit 33 inscrit dans le champ étiquette d'une trame Ethernet l'identificateur ID1 propre au réseau virtuel VLAN1' auquel appartient le terminal WT1. Cet identificateur de réseau virtuel est un numéro constitué de 12 bits conformément à la norme IEEE 802.1Q. Le circuit 33 est intercalé entre le circuit 35 de traitement de données et le circuit 32 d'émission/réception de trames radio. Le circuit 33 fournit au circuit 32 des trames Ethernet à émettre, alors que le circuit 32 fournit au circuit 33 des trames Ethernet reçues. Le circuit 35 de traitement de données fournit au circuit 33 de formation/décomposition de trames Ethernet des paquets Internet à émettre. Le circuit 33 fournit au circuit 35 des paquets Internet reçues.

Le circuit 34 de mémorisation d'un identificateur de réseau virtuel peut être réalisé selon deux variantes :
- Si l'identificateur de réseau virtuel est fixé, le circuit 34 peut être constitué d'un dispositif pour mémoriser un identificateur qu'un administrateur de réseau saisit au moyen d'un clavier, par exemple, afin de configurer manuellement l'interface radio de ce terminal.
- Si l'identificateur de réseau virtuel change fréquemment (par exemple, si les adresses Internet sont attribuées dynamiquement) le circuit 34 peut être constitué de moyens logiciels pour déterminer automatiquement un identificateur en fonction de l'adresse Internet du terminal, et selon des règles d'appartenance à un réseau virtuel.

Lorsqu'une trame arrive à un port d'un commutateur SW11, SW12, SW13, et si ce port n'est pas configuré conformément à la norme IEEE 802.1Q , ce port applique des règles pour déterminer l'appartenance à un réseau virtuel, d'après l'adresse Internet d'origine de la trame. Par exemple, le port 1 du commutateur SW13 extrait, de l'adresse Internet 192.168.2.2 du terminal T14, le champ 192.168.2, et en déduit que cette trame appartient au réseau virtuel VLAN2' parce que ce champ satisfait à la règle d'appartenance du réseau virtuel VLAN2'.

Pour les terminaux mobiles, tels que WT1 et WT2, les trames Ethernet sont étiquetées puis encapsulées dans des trames radio crées par les dispositifs d'interface radio de ces terminaux. Lorsqu'une trame Ethernet arrive sur le port 2 du commutateur SW13, elle est donc toujours étiquetée avec un identificateur de réseau virtuel. La trame comporte une étiquette ID1 si elle vient du terminal WT1, ou ID2 si elle vient du terminal WT2. Le commutateur SW13 connaît ainsi de manière directe et certaine à quel réseau virtuel appartient cette trame.

Supposons que le terminal WT1 se déplace alors qu'il est en cours de communication via le point d'accès radio AP1. Il sort de la zone couverte par le point d'accès radio AP1 rattaché au commutateur SW11, et entre dans la zone couverte par le point d'accès radio AP2, qui est rattaché au commutateur SW13 différent de SW11. Par hypothèse, l'ancien et le nouveau points d'accès radio utilisés appartiennent au même sous-réseau physique, c'est à dire sont reliés directement, ou via des commutateurs, à un même routeur.

Le terminal WT1 continue d'appartenir au réseau virtuel VLAN1' parce qu'il émet des trames Ethernet (encapsulées dans des trames radio) dont les en-têtes contiennent toujours le même identificateur de réseau virtuel, ID1, et parce que le port 2 du commutateur SW13 est configuré conformément à la norme IEEE 802.1Q.

Dans cet exemple, les terminaux sans fils incorporent un dispositif d'interface réseau radio conformes à l'invention. Dans d'autres exemples, tels que des ordinateurs personnels portables, le dispositif d'interface réseau radio est une carte réseau amovible enfichée sur un port du terminal.

L'utilisation du procédé selon l'invention a les avantages suivants :

II permet de réutiliser des commutateurs Ethernets déjà existants, qui sont aptes à supporter des réseaux virtuels identifiés par des adresses Internet.

Les terminaux mobiles peuvent conserver une adresse Internet constante. Ces terminaux peuvent avoir des adresses de sous-réseau différentes, dans un même sous-réseau physique.

Les domaines de diffusion coïncident avec les réseaux virtuels.

## Revendications

1. Procédé pour permettre la mobilité d'un terminal sans fil (WT1) dans un réseau local conforme à la norme IEEE 802.1Q, ce réseau comportant :
- des points d'accès radio (AP1, AP2) transparents pour les trames conformes à la norme IEEE 802,1Q ;
- des terminaux mobiles (WT11, WT12), ces terminaux appartenant à une pluralité de réseaux virtuels (VLAN1', VLAN2'), et ces terminaux ayant chacun une adresse Internet ;
- au moins un commutateurs (SW11, SW12, SW13)' et au moins un routeur (R), tous les commutateurs (SW11, SW12, SW13) étant configurés pour fonctionner en réseaux virtuels par adresses Internets ;
**caractérisé en ce qu'**il consiste à :
- configurer selon la norme IEEE 802.1Q :
-- tous les port (1-SW11, 2-SW13) de commutateur qui sont reliés à des points d'accès radio (AP1, AP2) ;
-- chaque port (3-SW11, 3-SW12, 4-SW12, 5-SW12, 3-SW13) de commutateur qui est utilisé pour une liaison inter-commutateur ou une liaison commutateur-routeur ;
-- l'interface de chaque routeur (R) reliée à un commutateur (SW12) ;
- établir une liaison entre le réseau local et un terminal mobile (WT1) via un port (2-SW13) de commutateur, et via un point d'accès radio (AP2) relié à ce port ;
- et inscrire dans l'en-tête de chaque trame émise par ce terminal mobile (WT1), en direction du réseau local, un identificateur de réseau virtuel (ID1, ID2), conformément à la norme IEEE 802.1Q.

2. Dispositif d'interface radio pour terminal sans fil (WT11, WT12) pour utiliser ce terminal dans un réseau local conforme à la norme IEEE 802.1Q, ce réseau comportant une pluralité de terminaux (WT11, WT12, T11, ..., T14) appartenant respectivement à une pluralité de réseaux virtuels (VLAN1', VLAN2') ; ces terminaux ayant chacun une adresse Internet ;
**caractérisée en ce que** cette interface comporte des moyens (33, 34) pour inscrire dans l'en-tête de chaque trame émise par ce terminal, en direction du réseau, un identificateur de réseau virtuel (ID1, ID2).

3. Dispositif selon la revendication 2, **caractérisé en ce que** les moyens (33, 34) pour inscrire dans l'en-tête comportent des moyens (34) pour mémoriser un identificateur fixé (ID1, ID2).

4. Dispositif selon la revendication 2, **caractérisé en ce que** les moyens (33, 34) pour inscrire dans l'en-tête comportent des moyens (34) pour déterminer un identificateur (ID1, ID2) en fonction de l'adresse Internet (TID) du terminal et selon des règles d'appartenance à un réseau virtuel.
